**Europäisches Patentamt**

**European Patent Office**

**Office européen des brevets**

(19)

(11) Veröffentlichungsnummer : **0 146 068**
**B1**

# (12) EUROPÄISCHE PATENTSCHRIFT

(45) Veröffentlichungstag der Patentschrift :
07.09.88

(21) Anmeldenummer : 84114655.8

(22) Anmeldetag : 03.12.84

(51) Int. Cl.⁴ : **C 08 L 15/00** // (C08L15/00, 23:16)

(54) Polymermischungen und daraus hergestellte Covulkanisate.

(30) Priorität : 14.12.83 DE 3345249

(43) Veröffentlichungstag der Anmeldung :
26.06.85 Patentblatt 85/26

(45) Bekanntmachung des Hinweises auf die Patenterteilung : 07.09.88 Patentblatt 88/36

(84) Benannte Vertragsstaaten :
DE FR GB IT

(56) Entgegenhaltungen :
EP-A- 0 065 144
DE-A- 3 232 692
DE-A- 3 311 217
DE-B- 2 913 992
US-A- 2 877 206

(73) Patentinhaber : **BAYER AG**
**Konzernverwaltung RP Patentabteilung**
**D-5090 Leverkusen 1 Bayerwerk (DE)**

(72) Erfinder : **Buding, Hartmuth, Dr.**
**Liebermannstrasse 1**
**D-4047 Dormagen (DE)**
Erfinder : **Königshofen, Heinrich, Dr.**
**Am Mühlenberg 26**
**D-5060 Bergisch-Gladbach 2 (DE)**
Erfinder : **Szentivanyi, Zsolt, Dr.**
**Carl-Rumpff-Strasse 9**
**D-5090 Leverkusen 1 (DE)**
Erfinder : **Thörmer, Joachim, Dr.**
**Emil-Nolde-Strasse 39**
**D-5090 Leverkusen 1 (DE)**

**Beschreibung**

Die Erfindung betrifft aus Polymermischungen aus weitgehend gesättigten Elastomeren aus Kohlenwasserstoffen und weitgehend gesättigten, nitrilgruppenhaltigen Elastomeren durch peroxidische Vernetzung hergestellte Covulkanisate.

Weitgehend gesättigte Elastomere aus Kohlenwasserstoffen sind beispielsweise Ethylen-Propylen- bzw. Ethylen-Propylen-Dien-Copolymerisate (EPM bzw. EPDM) sowie Butylkautschuk und Polyoctenamer. Sie enthalten maximal eine Doppelbindung auf acht Kohlenstoffatome. EPM und insbesondere EPDM sind bevorzugt.

EPM und EPDM sind hochwertige Kautschuke, die wärmebeständig, beständig gegen Chemikalien, Dampf und heißes Wasser sind. Sie werden durch Copolymerisation von Ethylen, Propylen und gegebenenfalls einem nicht-konjugierten Dien erhalten und können mit Hilfe von Peroxiden, im Falle von EPDM auch mit Hilfe von Schwefel vernetzt werden.

EPM und EPDM sind beispielsweise in Rubber Chemistry and Technology 45 (1972), 709-881, beschrieben.

Weitgehend gesättigte, nitrilgruppenhaltige Elastomere werden beispielsweise durch Hydrieren von Nitrilkautschuken (Butadien-Acrylnitril-Copolymerisaten) erhalten. Ihre Vulkanisate zeichnen sich durch hohe Festigkeit aus.

Solche Elastomere sind beispielsweise aus der US-A- 3 700 637 und der DE-A- 25 39 132 bekannt.

Es wurde nun überraschend gefunden, daß sich aus weitgehend gesättigten Elastomeren aus Kohlenwasserstoffen und weitgehend gesättigten, nitrilgruppenhaltigen Elastomeren homogene Mischungen herstellen lassen, die peroxisch zu Covulkanisaten mit überragenden Eigenschaften vernetzt werden können.

Gegenstand der Erfindung sind daher Covulkanisate, erhalten durch peroxidische Vernetzung von Mischungen aus (a) 35 bis 5 Gew.-%, vorzugsweise 20 bis 10 Gew.-% weitgehend gesättigten Elastomeren aus Kohlenwasserstoffen und (b) 65 bis 95 Gew.-%, vorzugsweise 80 bis 90 Gew.-% nitrilgruppenhaltigen Elastomeren mit 25 bis 140 Nitrilstickstoffatomen auf 1 000 Kohlenstoffatome und weniger als 12 Doppelbindungen, vorzugsweise weniger als 3 Doppelbindungen auf 1 000 Kohlenstoffatome, sowie (c) üblichen Mischungsbestandteilen, wobei sich die Prozentangaben auf die Summe aus (a) und (b) beziehen.

Die US-A- 2 877 206 lehrt die peroxidische Vernetzung von Polymeren von 1-Olefinen und hydrierten Dienpolymeren. Bei Polymeren dieser Art handelt es sich um gesättigte Kohlenwasserstoffpolymere, die weder Nitrilgruppen noch sonstige Heteroatome enthalten.

Die DE-B- 29 13 992 betrifft covulkanisierbare Kautschukmassen aus partiell hydriertem Dien/Nitril-Copolymerisat und einem Schwefelvulkanisiersystem. Die Massen können auch weitere Kautschuke wie NBR enthalten (Spalte 3, Zeilen 48/49). Die Vulkanisation mit Peroxiden wird als schwierig bis unmöglich bezeichnet (Spalte 3, Zeilen 22-32).

Dementsprechend lehrt die DE-B- 32 32 692 dann covulkanisierbare Kautschukzusammensetzungen aus partiell hydriertem Dien/Nitril-Copolymerisat, EPDM und einem Schwefelvulkanisiersystem.

Die DE-A- 33 11 217 beschreibt vulkanisierbare Copolymerisate, die mit Peroxiden oder einem Schwefelvulkanisiersystem vulkanisiert werden können. Da einerseits die Beispiele ausschließlich mit Schwefelvulkanisiersystemen arbeiten, andererseits keine Kohlenwasserstoff-Elastomeren genannt werden, erscheinen die erfindungsgemäßen Covulkanisate nicht nahegelegt.

EPDM enthält neben Ethylen und Propylen als Monomer beispielsweise Dicyclopentadien oder Ethylidennorbornen.

Bei der Herstellung der weitgehend gesättigten, nitrilgruppenhaltigen Elastomere geht man vorzugsweise von Nitrilkautschuken aus 10 bis 48 Gew.-% (Meth)acrylnitril, 50 bis 85 Gew.-% eines konjugierten Diens mit 4 bis 9 C-Atomen und 0 bis 30 Gew.-% eines dritten Monomers, beispielsweise (Meth)acrylsäure, (Meht)acrylsäurealkylester oder Vinylacetat aus, die gemäß DE-A- 25 39 132 hydriert werden.

Vorzugsweise bestehen die Nitrilkautschuke aus 48 bis 15 Gew.-% Acrylnitril und 52 bis 85 Gew.-% Butadien oder Isopren.

Übliche Mischungsbestandteile einer Kautschukmischung sind dem Fachmann bekannt ; es handelt sich beispielsweise um Füllstoffe, Weichmächer, Alterungschutzmittel Verarbeitungshilfsmittel, Pigmente, Säureakzeptoren und Vulkanisationschemikalien, wobei für die Vulkanisation der erfindungsgemäßen Kautschukmischung Peroxide verwendet werden.

Geeignete Peroxide sind z. B. Dialkylperoxide, Ketalperoxide, Aralkylperoxide, Peroxiether, Peroxiester.

Bevorzugt werden Di-tert.-butylperoxid, Bis-(tert.-butylperoxiisopropyl-benzol), Dicumylperoxid, 2,5-Dimethyl-2,5-di(tert.-butylperoxi)-hexan, 2,5-Dimethyl-2,5-di-(tert.-butylperoxi)-hexen-(3), 1,1-Bis(tert.-butylperoxi)-3,3,5-trimethylcyclohexan, Benzoylperoxid, tert.-Butylcumylperoxid oder tert.-Butylperbenzoat verwendet.

Die Peroxidmengen betragen 1 bis 15 Gew.-%, vorzugsweise 4 bis 8 Gew.-%, bezogen auf Kautschukfeststoff.

Die Covulkanisate sind sehr gut beständig in Heißluft, zeigen zudem eine geringe Quellung in Kühlflüssigkeiten, z. B. Polyglykolethern und ein hervorragendes Eigenschaftsniveau in den weiteren wesentlichen Kautschukeigenschaften. Sie eignen sich daher zur Herstellung von Dichtungen und anderen Gummiartikeln, insbesondere für Anwendungsbereiche mit speziellen Anforderungen.

Beispiel

Die nachfolgenden Mischungen (Gew.-Teile) wurden auf einer auf 50 °C erwärmten Laborwalze hergestellt. Aus den Mischungen wurden Platten mit den Abmessungen 100 × 100 × 2 mm hergestellt, 15 Minuten bei 180 °C vulkanisiert und 17 Stunden bei 150 °C getempert.

Aus den Platten wurden S 2-Stäbe nach DIN 53 504 gestanzt, an denen die nachfolgend angegebenen Eigenschaften gemessen wurden.

Polymer I ist ein hydriertes Acrylnitril-Butadien-Copolymerisat mit einem Acrylnitrilgehalt von 34 Gew.-%, einem Hydrierungsgrad von 99 % und einer Mooney-Viskosität ML 100 °C (1 + 4) von 70 ME.

Polymer II ist ein Ethylen-Propylen-Ethylidennorbornen-Terpolymerisat mit 48 Gew.-% Propylen und 50 Gew.-% Ethylen und einer Mooner-Viskosität ML4/100 °C von 70.

Polymer III ist ein Ethylen-Propylencopolymerisat mit einem Propylengehalt von 50 Gew.-% und einer Mooney-Viskosität ML 4/100 °C von 45.

Polymer IV ist ein Polyoctenamer mit einer Mooney-Viskosität ML 1 + 4/60 °C von 12, und ML 1 + 4/100 °C von 5.

Polymer V ist ein Butylkautschuk mit einem Gehalt an einpolymerisiertem Isopren von 2 Gew.-% und einer Mooney-Viskosität ML 1 + 8/100 °C von 48.

(Siehe Tabelle Seite 4 ff.)

| Mischung | A | B | C | D | E | F | G | H | I | K | L |
|---|---|---|---|---|---|---|---|---|---|---|---|
| Polymer I | 100 | 90 | 80 | 65 | 50 | – | 90 | 80 | 65 | 50 | – |
| Polymer II | – | 10 | 20 | 35 | 50 | 100 | – | – | – | – | – |
| Polymer III | – | – | – | – | – | – | 10 | 20 | 35 | 50 | 100 |
| Stearinsäure | 0,75 | 0,75 | 0,75 | 0,75 | 0,75 | 0,75 | 0,75 | 0,75 | 0,75 | 0,75 | 0,75 |
| Magnesiumoxid | 6,5 | 6,5 | 6,5 | 6,5 | 6,5 | 6,5 | 6,5 | 6,5 | 6,5 | 6,5 | 6,5 |
| Zinkoxyd aktiv | 3,5 | 3,5 | 3,5 | 3,5 | 3,5 | 3,5 | 3,5 | 3,5 | 3,5 | 3,5 | 3,5 |
| styrolisiertes Diphenylamin | 1,1 | 1,1 | 1,1 | 1,1 | 1,1 | 1,1 | 1,1 | 1,1 | 1,1 | 1,1 | 1,1 |
| Zink-Salz des Mercaptobenzimidazcls | 0,4 | 0,4 | 0,4 | 0,4 | 0,4 | 0,4 | 0,4 | 0,4 | 0,4 | 0,4 | 0,4 |
| Ruß N 762 | 50 | 50 | 50 | 50 | 50 | 50 | 50 | 50 | 50 | 50 | 50 |
| Triallyisocyanurat | 1,75 | 1,75 | 1,75 | 1,75 | 1,75 | 1,75 | 1,75 | 1,75 | 1,75 | 1,75 | 1,75 |
| Bis-(tert.-butylperoxiisopropyl)-benzol | 7,5 | 7,5 | 7,5 | 7,5 | 7,5 | 7,5 | 7,5 | 7,5 | 7,5 | 7,5 | 7,5 |
| **Eigenschaften** | | | | | | | | | | | |
| Zugfestigkeit $\underline{/}\overline{MPa}\underline{/}$ | 17,5 | 19,6 | 19,0 | 17,9 | 15,0 | 10,9 | 17,8 | 17,3 | 15,9 | 14,5 | 9,5 |
| Bruchdehnung $\underline{/}\overline{\%}\underline{/}$ | 290 | 315 | 290 | 300 | 250 | 220 | 290 | 270 | 255 | 240 | 250 |
| Spannungswert $\underline{/}\overline{MPa}\underline{/}$ | 8,2 | 8,3 | 8,2 | 8,2 | 7,8 | 5,6 | 7,6 | 7,4 | 8,0 | 7,7 | 3,9 |
| Shore-A-Härte | 75 | 76 | 76 | 76 | 76 | 73 | 76 | 75 | 76 | 77 | 73 |

0 146 068

| Mischung | M | N | O | P | Q | R | S | T |
|---|---|---|---|---|---|---|---|---|
| Polymer I | 90 | 80 | 65 | 50 | 90 | 80 | 65 | 50 |
| Polymer IV | 10 | 20 | 35 | 50 | – | – | – | – |
| Polymer V | – | – | – | – | 10 | 20 | 35 | 50 |
| Stearinsäure | 0,75 | 0,75 | 0,75 | 0,75 | 0,75 | 0,75 | 0,75 | 0,75 |
| Magnesiumoxid | 6,5 | 6,5 | 6,5 | 6,5 | 6,5 | 6,5 | 6,5 | 6,5 |
| Zinkoxyd aktiv | 3,5 | 3,5 | 3,5 | 3,5 | 3,5 | 3,5 | 3,5 | 3,5 |
| styrolisiertes Diphenylamin | 1,1 | 1,1 | 1,1 | 1,1 | 1,1 | 1,1 | 1,1 | 1,1 |
| Zink-Salz des Mercaptobenzimidazols | 0,4 | 0,4 | 0,4 | 0,4 | 0,4 | 0,4 | 0,4 | 0,4 |
| Ruß N 762 | 50 | 50 | 50 | 50 | 50 | 50 | 50 | 50 |
| Triallylisocyanurat | 1,75 | 1,75 | 1,75 | 1,75 | 1,75 | 1,75 | 1,75 | 1,75 |
| Bis-(tert.-butylperoxiisopropyl)-benzol | 7,5 | 7,5 | 7,5 | 7,5 | 7,5 | 7,5 | 7,5 | 7,5 |
| Eigenschaften | | | | | | | | |
| Zugfestigkeit $/\overline{M}P\underline{a}7$ | 17,1 | 17,1 | 15,8 | 14,9 | 16,8 | 15,3 | 11,0 | 5,6 |
| Bruchdehnung $/\overline{\underline{s}}7$ | 310 | 350 | 340 | 320 | 310 | 280 | 210 | 125 |
| Spannungswert $/\overline{M}P\underline{a}7$ | 7,3 | 6,6 | 7,3 | 7,2 | 6,4 | 6,7 | 6,2 | 5,0 |
| Shore-A-Härte | 75 | 74 | 77 | 78 | 73 | 71 | 67 | 62 |

0 146 068

**Patentansprüche**

1. Covulkanisate, erhalten durch peroxidische Vernetzung von Mischungen aus (a) 35 bis 5 Gew.-% weitgehend gesättigten Elastomeren aus Kohlenwasserstoffen und (b) 65 bis 95 Gew.-% eines nitrilgruppenhaltigen Elastomeren mit 25 bis 140 Nitrilstickstoffatomen und weniger als 12 Doppelbindungen auf 1 000 Kohlenstoffatome sowie (c) üblichen Mischungsbestandteilen, wobei sich die Prozentangaben auf die Summe aus (a) und (b) beziehen.

2. Covulkanisate nach Anspruch 1 aus 20 bis 10 Gew.-% (a) und 80 bis 90 Gew.-% (b).

3. Covulkanisate nach Anspruch 1, in denen (b) weniger als 3 Doppelbindungen auf 1 000 Kohlenstoffatome enthält.

4. Covulkanisate nach Anspruch 1, in denen (a) EPM oder EPDM ist.

**Claims**

1. Covulcanisates obtained by peroxidic cross-linking of mixtures of (a) 35 to 5 % by weight of substantially saturated elastomers of hydrocarbons and (b) 65 to 95 % by weight of a nitrile group-containing elastomer which has 25 to 140 nitrile nitrogen atoms and less than 12 double bonds per 1 000 carbon and (c) conventional mixture components, the percentages referring to the sums of (a) and (b).

2. Covulcanisates according to claim 1 obtained from 20 to 10 % by weight of (a) and 80 to 90 % by weight of (b).

3. Covulcanisates according to claim 1 in which (b) contains less than three double bonds per 1 000 carbon atoms.

4. Covulcanisates according to claim 1, in which (a) is EPM or EPDM.

**Revendications**

1. Covulcanisats obtenus par réticulation par les péroxydes de mélanges de (a) 35 à 5 % en poids d'élastomères largement saturés d'hydrocarbures et (b) 65 à 95 % en poids d'un élastomère à groupes nitriles ayant 25 à 140 atomes d'azote de nitrile et moins de 12 doubles liaisons pour 1 000 atomes de carbone ainsi que (c) des constituants de mélange habituels, les indications de pourcentages étant rapportées à la somme de (a) et (b).

2. Covulcanisats selon la revendication 1, obtenus par les péroxydes de mélanges de 20 à 10 % en poids de (a) et 80 à 90 % en poids de (b).

3. Covulcanisats selon la revendication 1, dans lesquels (b) contient moins de 3 doubles liaisons pour 1 000 atomes de carbone.

4. Covulcanisats selon la revendication 1, dans lesquels (a) est l'EPM ou l'EPDM.